# FASCICULE DE BREVET EUROPEEN

(11) **EP 3 237 230 B1**
(45) Date de publication et mention de la délivrance du brevet: **06.02.2019**
(21) Numéro de dépôt: 15813868.5
(22) Date de dépôt: 22.12.2015
(51) Int. Cl.: B29D 30/34, B60C 9/22

(54) **DISPOSITIF DE DEPOSE D'UN FIL ONDULE SUR UNE SURFACE DE RECEPTION**
VORRICHTUNG ZUR ABSCHEIDUNG EINES GEWELLTEN DRAHTES AUF EINE AUFNAHMEFLÄCHE
DEVICE FOR DEPOSITING A CRIMPED WIRE ON A RECEIVING SURFACE

(30) Priorité: 23.12.2014 FR 1463213
(43) Date de publication de la demande: 01.11.2017
(73) Titulaire: Compagnie Générale des Etablissements Michelin, 63000 Clermont-Ferrand (FR)
(72) Inventeur: DRUET, Michel, 63040 Clermont-Ferrand Cedex 9 (FR); DETTORRE, Jean-Marie, 63040 Clermont-Ferrand Cedex 9 (FR); FAUGERAS, Alain, 63040 Clermont-Ferrand Cedex 9 (FR); HINC, Henri, 63040 Clermont-Ferrand Cedex 9 (FR)
(74) Mandataire: Dequire, Philippe Jean-Marie Denis
(86) Numéro de dépôt international: PCT/EP2015/080928
(87) Numéro de publication internationale: WO 2016/102537

(56) Documents cités:
- EP-A1- 1 208 963
- EP-A2- 0 976 538
- FR-A5- 2 063 617
- GB-A- 1 384 812
- JP-A- H10 225 998
- US-A- 4 401 493

## Description

L'invention se situe dans le domaine de la fabrication de pneumatiques.

Plus précisément, l'invention concerne la dépose d'un fil ondulé sur une surface de dépose cylindrique telle une ébauche de pneumatique.

Par pneumatique ou enveloppe, on entend le produit fini, vulcanisé, et destiné à être monté sur une jante d'une roue.

Par ébauche de pneumatique, on entend le produit intermédiaire formé, avant vulcanisation, par l'assemblage de différents produits semi-finis prenant la forme de nappes de gomme, éventuellement renforcées ou complexées avec un autre produit semi-fini, de profilés de gomme, éventuellement complexés entre eux, de tringles métalliques, etc.

En vue de déposer un fil ondulé sur une surface de réception, une première méthode peut consister à donner une forme ondulée au fil avant de le déposer sur cette surface de réception.

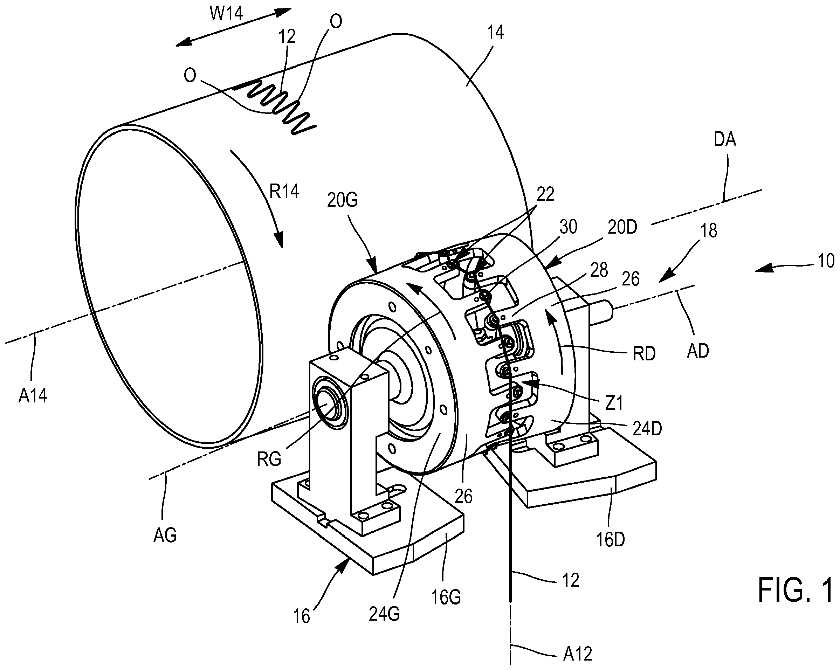

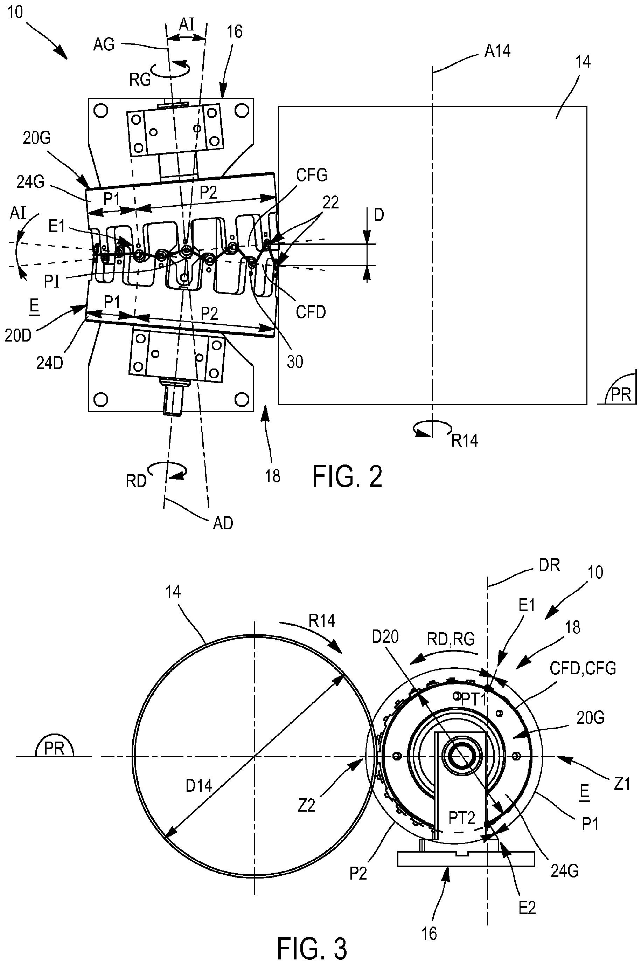

C'est ce que propose le document EP 0976538 qui divulgue un procédé de réalisation d'une nappe carcasse de type radiale dans lequel un fil déjà ondulé est déposé sur une bande de caoutchouc. Dans une première variante illustrée par la figure 1, le fil ondulé est déposé sur une bande de caoutchouc plane. Dans une seconde variante illustrée par la figure 2, le fil ondulé est déposé sur une bande de caoutchouc préalablement mise en forme sur un noyau torique. Dans l'une ou l'autre de ces variantes, des crochets montés sur des courroies permettent de donner une forme ondulée au fil avant de le déposer sur la bande de caoutchouc.

Selon un premier inconvénient, les moyens de dépose décrits dans ce document EP 0976538 ne sont pas adaptés à la dépose d'un fil ondulé sur une partie de la largeur d'une ébauche de pneumatique.

En effet, dans l'une ou l'autre des variantes proposées, les crochets doivent se situer à l'extérieur ou en bordure de la bande de caoutchouc afin de pouvoir effectuer une rotation suffisante pour libérer le fil après la dépose du fil ondulé sur la bande de caoutchouc, et cela sans nuire à la qualité de dépose du fil.

Selon un autre inconvénient, dans ce document EP 0976538, le fil doit nécessairement glisser sur les crochets afin d'être ondulé avant sa dépose. Donc, les crochets utilisés dans ce document EP 0976538 ne sont pas adaptés à la dépose d'un fil présentant un certain collant, par exemple parce qu'il est enrobé dans un revêtement caoutchouteux. D'une part, l'adhérence du fil sur les crochets pourrait ralentir la dépose ou la rendre impossible, et d'autre part, les crochets pourraient endommager le fil et son revêtement.

Enfin, selon un autre inconvénient, ce document EP 0976538 prévoit de former les ondulations du fil dans un plan avant de déposer le fil ondulé sur la bande de caoutchouc cylindrique. Donc, il est nécessaire de faire circuler les crochets le long de circuits fermés comprenant au moins une portion linéaire et au moins une portion courbe ou circulaire permettant le retour des crochets vers la portion linéaire. Un tel agencement à la fois linéaire et courbe des circuits fermés peut entraîner une limitation de la vitesse de déplacement des crochets et donc limiter la vitesse de dépose du fil ondulé.

Aussi, un autre document EP 1208963 divulgue un dispositif plus adapté à la dépose d'un fil ondulé sur une partie de la largeur d'une ébauche de pneumatique.

Ce document EP 1208963 visant plus particulièrement la réalisation d'une nappe dite à zéro degré dans un pneumatique, il prévoit d'enrouler un fil de renfort sur plusieurs tours autour de l'ébauche de pneumatique.

Et, comme le fil utilisé pour la réalisation d'une nappe à zéro degré ne doit pas être étirable, ce document EP 1208963 prévoit une dépose ondulatoire du fil.

Par dépose ondulatoire, on entend une méthode consistant à déposer le fil en lui faisant suivre une trajectoire ondulée sur la surface de dépose, cette dépose ondulatoire se distinguant de la méthode précédente dans laquelle le fil est ondulé avant sa dépose.

Grâce à cette dépose ondulatoire, le fil est déposé avec une surlongueur permettant d'augmenter par la suite le diamètre de l'ébauche sans risquer d'étirer ou de rompre le fil déposé. Plus en détail, lors de l'augmentation de diamètre de l'ébauche de pneumatique, les amplitudes des ondulations du fil réduisent, le fil se redresse dans la direction circonférentielle de l'ébauche, et chaque tour de fil déposé autour de l'ébauche augmente en diamètre.

Afin de mettre en oeuvre la dépose ondulatoire d'un fil sur une ébauche de pneumatique, ce document EP 1208963 prévoit un appareil d'application comprenant des moyens de délivrance du fil, des moyens de déplacement transversal du fil et des moyens de pose du fil sur l'ébauche de pneumatique.

Plus en détail, les moyens de délivrance du fil comprennent une poulie d'arrivée guidant le fil jusqu'à un cabestan dont la vitesse de rotation est asservie à la vitesse de rotation de l'ébauche afin de contrôler la longueur de fil délivré par tour de l'ébauche, les moyens de déplacement comprennent une tête de guidage prenant la forme d'une bielle oscillante sur laquelle sont montés deux galets de guidage du fil, et les moyens de pose prennent la forme d'un galet de pose monté libre en rotation autour d'un axe parallèle à l'axe de rotation de l'ébauche.

Afin de décrire un mouvement d'ellipse permettant de faire naviguer le fil transversalement, la bielle oscillante est montée à l'extrémité d'arbres rotatifs via des bielles articulées et des chapes mobiles en rotation.

Si l'appareil présenté dans ce document EP 1208963 permet la dépose ondulatoire d'un fil sur une partie de la largeur d'une ébauche de pneumatique, il présente néanmoins certains inconvénients.

D'une part, il est nécessaire que le fil déposé présente une certaine raideur afin d'entraîner des mouvements transversaux de la bielle oscillante lorsque la vitesse de délivrance du fil est supérieure à la vitesse de rotation de l'ébauche.

D'autre part, la fréquence maximale des mouvements transversaux de la bielle oscillante et donc la vitesse de dépose ondulatoire maximale de cet appareil sont forcément limitées mécaniquement par les frottements et l'inertie du fil.

Enfin, lors de l'utilisation de l'appareil décrit dans ce document EP 1208963, il est apparu que le fil avait tendance à se tendre en raison de la distance séparant nécessairement les moyens déplaçant le fil transversalement, à savoir les galets de guidage, et le moyen effectuant la dépose du fil sur l'ébauche, à savoir le galet de pose. Et, cette tension du fil est susceptible d'entrainer des dysfonctionnements de l'appareil et de nuire à la qualité de dépose du fil sur l'ébauche, alors que la qualité de fabrication du futur pneumatique repose en partie sur la qualité de dépose de ce fil.

Aussi, l'invention a pour objectif de pallier au moins l'un des inconvénients des dispositifs qui viennent d'être décrits.

Parallèlement, l'invention a aussi pour objectif de fournir une solution de dépose d'un fil ondulé sur une ébauche de pneumatique cylindrique qui permette de déposer la surlongueur de fil souhaitée sur l'ébauche, et cela indépendamment des écarts dimensionnels de l'ébauche autour de son diamètre théorique.

A cet effet, l'invention a pour objet un dispositif permettant de déposer un fil déjà ondulé sur une surface de réception et de façon que les ondulations du fil s'étendent dans la largeur de la surface de réception.

Selon l'invention, le dispositif de dépose se caractérise en ce qu'il comprend un support et une tête de dépose du fil ondulé sur la surface de réception, cette tête de dépose comprenant deux convoyeurs droit et gauche, chaque convoyeur transportant une pluralité d'éléments permettant de saisir le fil, de mettre le fil en forme ondulée et d'emmener le fil ondulé jusqu'à la surface de réception, les éléments de chaque convoyeur étant alignés le long d'un circuit fermé propre à chaque convoyeur, les éléments de chaque convoyeur s'étendant vers l'extérieur de leur circuit fermé, les éléments de chaque convoyeur étant mis en mouvement le long de leur circuit fermé, les deux convoyeurs droit et gauche étant montés en vis-à-vis sur le support de façon que chaque élément d'un convoyeur croise à deux endroits le circuit fermé suivi par les éléments de l'autre convoyeur lorsque cet élément effectue un tour complet du circuit fermé de son convoyeur, et la mise en mouvement des éléments d'un convoyeur étant synchronisée avec la mise en mouvement des éléments de l'autre convoyeur.

Selon un premier avantage, grâce à son agencement, le dispositif de dépose permet de déposer un fil ondulé sur une partie de la largeur d'une ébauche de pneumatique.

Ensuite, comme il ne réalise pas une dépose ondulatoire nécessitant des moyens oscillants susceptibles de limiter la vitesse de dépose du fil sur la surface de réception, le dispositif de dépose selon l'invention permet d'atteindre des vitesses de dépose élevées jusqu'à 2,5 mètres par seconde de fil ondulé déposé.

Grâce à l'utilisation d'éléments circulant autour de circuits fermés qui se croisent, le dispositif de dépose selon l'invention permet de déposer de manière ondulée aussi bien un fil présentant une certaine rigidité qu'un fil présentant une certaine souplesse.

Enfin, comme les éléments des convoyeurs de la tête de dépose assurent à la fois la saisie du fil, la mise en forme ondulée de ce fil et la dépose du fil, le dispositif de dépose n'est pas affecté par des problèmes de tension ou d'inertie du fil qui surviendraient si ces fonctions étaient assurées par des moyens distincts et distants l'un de l'autre.

Afin d'éviter de recourir à un dispositif de guidage qui aiderait les éléments à saisir le fil lorsqu'ils se croisent, chaque élément d'un convoyeur est espacé de l'élément qui le précède et de l'élément qui le suit au sein du circuit fermé de son convoyeur, et les deux convoyeurs droit et gauche sont montés sur le support de façon que les éléments d'un convoyeur engrènent, de préférence sans entrer en contact, avec les éléments de l'autre convoyeur quand ces éléments se croisent.

Afin de favoriser une dépose du fil ondulé sans glissement sur une surface de réception cylindrique, au moins une portion de chaque circuit fermé suit un profil en arc de cercle.

Dans un mode de réalisation préféré visant à faciliter la fabrication et à réduire le coût du dispositif de dépose, chaque convoyeur prend la forme d'une roue montée sur le support et entraînée en rotation autour de son axe central.

Afin de permettre la dépose d'un fil présentant un certain collant, par exemple parce qu'il est enrobé de caoutchouc, chaque élément prend la forme d'un pion mobile en rotation autour de son axe longitudinal ou d'un pion équipé d'un galet de guidage monté mobile en rotation autour de son axe longitudinal.

D'autres caractéristiques et avantages de l'invention apparaîtront dans la description qui va suivre. Cette description, donnée à titre d'exemple et non limitative, se réfère aux dessins joints en annexe sur lesquels :
- la figure 1 est une vue en perspective d'une dépose d'un fil ondulé sur une surface de réception cylindrique effectuée avec un dispositif de dépose selon l'invention et dans un premier mode de réalisation,
- la figure 2 est une vue de dessus d'une dépose d'un fil ondulé sur une surface de réception cylindrique effectuée avec un dispositif de dépose selon l'invention et dans un premier mode de réalisation,
- la figure 3 est une vue de côté d'une dépose d'un fil ondulé sur une surface de réception cylindrique effectuée avec un dispositif de dépose selon l'invention et dans un premier mode de réalisation,
- la figure 4 est une vue de face d'une dépose d'un fil ondulé sur une surface de réception cylindrique effectuée avec un dispositif de dépose selon l'invention et dans un premier mode de réalisation,
- la figure 5 est une vue en perspective d'une variante améliorée d'un convoyeur d'un dispositif de dépose selon l'invention,
- la figure 6 est une vue en perspective d'un dispositif de dépose selon l'invention et dans un second mode de réalisation,
- les figures 7 et 8 sont des vues en coupe illustrant les deux positions pouvant être prises par un pion d'un convoyeur d'un dispositif de dépose selon l'invention,
- la figure 9 est une représentation cinématique en vue de dessus d'un troisième mode de réalisation d'un dispositif de dépose selon l'invention,
- la figure 10 est une représentation cinématique en vue de dessus d'un quatrième mode de réalisation d'un dispositif de dépose selon l'invention,
- la figure 11 est une représentation cinématique en vue de côté d'un dispositif de délivrance du fil utilisé avec les troisième et quatrième modes de réalisation du dispositif de dépose selon l'invention.

Comme l'illustre la figure 1, l'invention est relative à un dispositif de dépose 10 d'un fil 12 ondulé sur une surface de réception 14.

Dans la présente invention, le fil 12 est préalablement ondulé avant d'être déposé sur la surface de réception 14. De plus, le dispositif de dépose 10 dépose le fil 12 sur la surface de réception 14 de façon que les ondulations O du fil 12 s'étendent dans la largeur W14 de la surface de réception 14.

Dans l'application visée par la présente invention, à savoir la fabrication de pneumatiques, la surface de réception 14 est généralement une ébauche de pneumatique cylindrique, et la dépose d'un fil 12 ondulé autour de l'ébauche de pneumatique permet ensuite d'augmenter le diamètre de cette ébauche lors d'une étape dite de conformation.

Toujours dans cette application relative à la fabrication de pneumatiques, la surface de réception 14 peut être une ébauche de pneumatique ou un produit semi-fini fabriqué sur un support cylindrique et destiné à être transféré par la suite sur une ébauche de pneumatique.

Par fil 12, on entend un fil unique ou un ensemble de fils tressés ou torsadés. Un fil 12 peut être réalisé en PET (Polytéréphtalate d'éthylène), en aramide, en nylon, métallique, de nature composite, etc. En complément, le fil 12 ou l'ensemble de fils 12 peuvent être enrobés ou noyés dans un mélange caoutchouteux.

Selon l'invention, le dispositif de dépose 10 comprend un support 16 et une tête de dépose 18 du fil 12 ondulé sur la surface de réception 14. Cette tête de dépose 18 comprend deux convoyeurs droit 20D et gauche 20G, et chaque convoyeur 20D,20G transporte une pluralité d'éléments 22 permettant de saisir le fil 12, de mettre le fil 12 en forme ondulée et d'emmener le fil 12 ondulé jusqu'à la surface de réception 14.

Comme le montrent les vues de dessus et de côté du dispositif de dépose 10 en figure 2 et en figure 3, les éléments 22 de chaque convoyeur 20D,20G sont alignés le long d'un circuit fermé CFD,CFG propre à chaque convoyeur.

Afin de permettre la saisie du fil 12 à la manière de crochets, les éléments 22 de chaque convoyeur 20D,20G s'étendent vers l'extérieur E de leur circuit fermé CFD,CFG. On entend par extérieur E d'un circuit fermé CFD,CFG tout ce qui se situe, en projection dans un plan, en dehors du périmètre délimité par ce circuit fermé dans ce plan.

En vue de saisir le fil 12, de mettre le fil 12 en forme ondulée et de déposer le fil 12 ondulé sur la surface de réception 14, les éléments 22 de chaque convoyeur 20D,20G sont mis en mouvement le long de leur circuit fermé CFD,CFG.

Avantageusement, la mise en mouvement des éléments 22 autour de leur circuit fermé CFD,CFG permet aussi bien de déposer le fil 12 ondulé sur une surface de réception 14 plane et en mouvement de translation que sur une surface de réception 14 cylindrique et en mouvement de rotation R14 autour de son axe central A14.

Comme cela est visible en figure 1, le fil 12 est délivré à la tête de dépose 18 sous une forme rectiligne s'étendant le long d'un axe de délivrance A12.

Afin d'emmener le fil 12 à prendre progressivement une forme ondulée, les deux convoyeurs droit 20D et gauche 20G sont montés en vis-à-vis sur le support 16 de façon que chaque élément 22 d'un convoyeur 20D,20G croise à deux endroits E1,E2 le circuit fermé CFD,CFG suivi par les éléments 22 de l'autre convoyeur 20D,20G lorsque cet élément 22 effectue un tour complet du circuit fermé CFD,CFG de son convoyeur.

Ainsi, et comme l'illustrent les figures 1 à 3, dans une première portion P1 des circuits fermés CFD,CFG utilisée pour saisir le fil 12, les éléments 22 d'un convoyeur 20D,20G se déplacent dans le dos des éléments 22 de l'autre convoyeur 20D,20G, et dans une seconde portion P2 des circuits fermés CFD,CFG utilisée pour mettre le fil 12 en forme ondulée et le déposer sur la surface de réception 14, les éléments 22 d'un convoyeur 20D,20G se déplacent en face des éléments 22 de l'autre convoyeur 20D,20G.

Plus précisément, lorsqu'il parcourt chacune des portions P1,P2 du circuit fermé CFD,CFG de son convoyeur, chaque élément 22 s'éloigne progressivement du circuit fermé CFD,CFG suivi par les éléments 22 de l'autre convoyeur 20D,20G, puis cet élément 22 se rapproche progressivement du circuit fermé CFD,CFG suivi par les éléments 22 de l'autre convoyeur 20D,20G. Cette progressivité du rapprochement et de l'éloignement des éléments 22 des deux convoyeurs 20D,20G permet une mise en forme progressive du fil 12 et elle autorise la mise en forme d'un fil 12 qu'il soit rigide ou qu'il soit souple.

Lors de l'utilisation du dispositif de dépose 10, il est prévu de délivrer le fil 12 à la tête de dépose 18 et de déposer le fil 12 ondulé sur la surface de réception 14 dans des zones Z1,Z2 dans lesquelles les circuits fermés CFD,CFG suivis par les éléments 22 des deux convoyeurs 20D,20G sont les plus éloignés.

Plus précisément, le fil 12 arrive dans une zone d'arrivée Z1 de la première portion P1 des circuits fermés CFD,CFG dans laquelle les éléments 22 des convoyeurs 20D,20G sont les plus éloignés et dos-à-dos, comme le montre la figure 1. Ainsi, juste après cette zone d'arrivée Z1, le fil 12 est progressivement saisi par les éléments 22 qui tendent à se rapprocher jusqu'à leur première intersection au premier endroit E1.

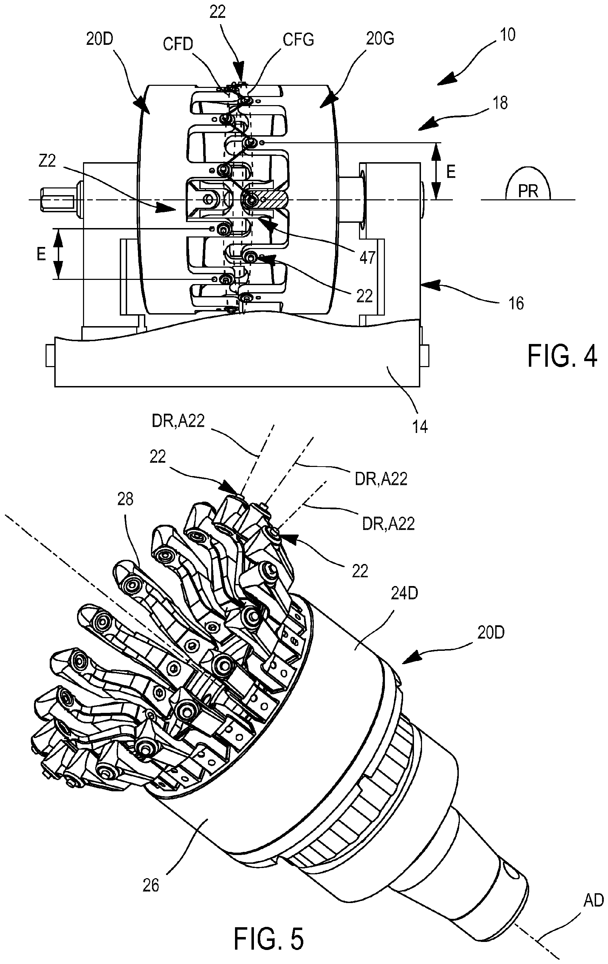

Ensuite, le fil 12 ondulé est déposé sur la surface de réception 14 depuis une zone de dépose Z2 de la seconde portion P2 des circuits fermés CFD,CFG dans laquelle les éléments 22 des convoyeurs 20D,20G sont les plus éloignés et face-à face, comme le montre la figure 4. Ainsi, le fil 12 est déposé sur la surface de réception 14 lorsque ses ondulations O sont maximales.

En utilisant les mêmes moyens, à savoir les convoyeurs 20D,20G et leurs éléments 22, pour recevoir le fil 12, le mettre en forme ondulée, et le déposer sur la surface de réception 14, l'agencement du dispositif de dépose 10 selon l'invention est simplifié et donc son fonctionnement est fiabilisé. Avantageusement, la mise en forme progressive du fil 12 renforce la fiabilité du dispositif de dépose 10.

D'un point de vue plus général, l'utilisation de convoyeurs 20D,20G et non de moyens oscillants pour déplacer les éléments 22 permet au dispositif de dépose 10 selon l'invention d'atteindre des vitesses de dépose élevées, jusqu'à 2,5 mètres par seconde de fil 12 ondulé déposé lors d'essais réalisés avec un prototype du dispositif de dépose 10 selon l'invention.

Pour obtenir un fonctionnement correct du dispositif de dépose 10 et parvenir à donner une forme ondulée au fil 12, la mise en mouvement des éléments 22 d'un convoyeur 20D,20G est synchronisée avec la mise en mouvement des éléments 22 de l'autre convoyeur 20D,20G. Plus en détail, la mise en mouvement des éléments 22 d'un convoyeur 20D,20G est synchronisée avec la mise en mouvement des éléments 22 de l'autre convoyeur 20D,20G de façon à ce que le fil 12 soit alternativement saisi par un élément 22 d'un des convoyeurs 20D,20G puis par un élément 22 de l'autre convoyeur 20D,20G.

Parallèlement, la synchronisation des mouvements des éléments 22 le long des circuits fermés CFD,CFG des convoyeurs 20D,20G permet aussi la réalisation d'ondulations O du fil 12 régulières, ce qui est important lorsque l'on souhaite maîtriser précisément la surlongueur de fil 12 déposée sur la surface de réception 14.

Afin de faciliter la mise en oeuvre de cette synchronisation, chaque convoyeur 20D,20G transporte un même nombre d'éléments 22, par exemple de 12 à 18 éléments.

Dans le même objectif, et sachant que, par longueur des circuits fermés CFD,CFG, on entend la longueur de ces circuits développés, les circuits fermés CFD,CFG des deux convoyeurs 20D,20G ont une même longueur, et les éléments 22 sont répartis de la même manière dans la longueur de chacun des circuits fermés.

Comme cela sera détaillé ultérieurement, les mouvements des éléments 22 des deux convoyeurs 20D,20G peuvent être synchronisés mécaniquement ou électroniquement.

Afin d'éviter de recourir à un dispositif de guidage qui aiderait les éléments 22 à saisir le fil 12 lorsqu'ils se croisent, chaque élément 22 d'un convoyeur 20D,20G est espacé de l'élément 22 qui le précède et de l'élément 22 qui le suit au sein du circuit fermé CFD,CFG de son convoyeur 20D,20G, et les deux convoyeurs droit 20D et gauche 20G sont montés sur le support 16 de façon que les éléments 22 d'un convoyeur 20D,20G engrènent, de préférence sans entrer en contact afin d'éviter les frottements, avec les éléments 22 de l'autre convoyeur 20D,20G quand ces éléments 22 se croisent.

Plus en détail, deux éléments 22 successifs d'un convoyeur 20D,20G sont séparés par un espace E permettant à un élément 22 de l'autre convoyeur de se glisser entre ces deux éléments successifs 22 lorsque les éléments 22 des deux convoyeurs sont mis en mouvement.

De préférence, tous les éléments 22 de chaque convoyeur sont séparés par un espace E régulier le long du circuit fermé CFD,CFG de leur convoyeur 20D,20G. Ainsi, la période des ondulations O du fil 12 entre les différents éléments 22 de chaque convoyeur 20D,20G reste constante, et seule l'amplitude de ces ondulations O peut être modifiée afin de faire varier la surlongueur de fil 12 déposé, comme cela est décrit ci-après.

Bien entendu, la synchronisation des mouvements des éléments 22 des deux convoyeurs 20D,20G est nécessaire en raison de cet engrenage des éléments 22 qui s'entrechoqueraient si elle n'était pas prévue.

Selon l'invention, au moins une portion P1,P2 de chaque circuit fermé CFD,CFG suit un profil en arc de cercle. Mais de préférence, c'est la seconde portion P2 des circuits fermés CFD,CFG qui suit un profil en arc-de-cercle dans la zone de dépose Z2 dans laquelle les éléments 22 des convoyeurs 20D,20G sont utilisés pour déposer le fil 12 ondulé sur la surface de réception. En offrant un profil circulaire dans la zone de dépose Z2 du fil, les deux circuits fermés CFD,CFG permettent une dépose du fil 12 ondulé sans glissement sur une surface de réception 14 cylindrique telle une ébauche de pneumatique.

De préférence encore, chaque convoyeur 20D,20G prend la forme d'une roue 24D,24G montée sur le support 16 et entraînée en rotation RD,RG autour de son axe central AD,AG. Cette forme circulaire des convoyeurs 20D,20G simplifie l'agencement, et donc réduit le coût de fabrication de la tête de dépose 18, par rapport à un agencement dans lequel les convoyeurs 20D,20G prendraient par exemple la forme de convoyeurs à chaînes sur lesquelles seraient fixés les éléments 22.

Bien entendu, pour le bon fonctionnement du dispositif de dépose 10 et en raison de l'engrenage des éléments 22, les deux roues 24D,24G sont entrainées en rotation RD,RG dans un sens opposé au sens de rotation R14 de la surface de réception 14 cylindrique.

En raison de la forme circulaire préférée des convoyeurs 20D,20G, les circuits fermés CFD,CFG de ces convoyeurs sont circulaires et les éléments 22 sont répartis à espace E régulier le long de la circonférence circulaire de ces circuits fermés CFD,CFG.

Toujours de préférence, les circuits fermés circulaires CFD,CFG des deux convoyeurs 20D,20G ont un diamètre D20 identique.

Ensuite, les axes centraux AD,AG des deux roues 24D,24G se situant dans un même plan de référence PR, les axes centraux AD,AG des deux roues 24D,24G ainsi que les deux circuits fermés circulaires CFD,CFG se croisent dans ce plan de référence PR en un point d'intersection PI et selon un angle d'intersection AI permettant de définir l'amplitude des ondulations O du fil 12 ondulé déposé sur la surface de réception 14. Ainsi, lorsque l'angle AI est nul, les axes centraux AD,AG des deux roues 24D,24G sont confondus et les éléments 22 ne permettent ni de saisir le fil 12 ni de le mettre sous forme ondulée. Et, plus l'angle d'intersection AI augmente, plus la distance D entre les éléments 22 des deux roues 24D,24G augmente dans la zone de dépose Z2 du fil 12, ce qui a pour conséquence d'augmenter aussi l'amplitude des ondulations O du fil 12 déposé.

Plus précisément, les circuits fermés circulaires CFD,CFG se croisent en deux points PT1,PT2 situés de part et d'autre du plan de référence PR, le long d'une droite de référence DR perpendiculaire au plan de référence PR et distante du point d'intersection PI des axes centraux AG,AD dans ce plan de référence PR, les deux points d'intersection PT1,PT2 étant aussi équidistants du point d'intersection PI des axes centraux AD,AG. Aussi, les deux points PT1,PT2 définissent précisément les deux endroits E1,E2 où les éléments 22 des deux convoyeurs se croisent.

Afin de permettre aux éléments 22 d'un convoyeur 20D,20G d'engrener avec les éléments 22 de l'autre convoyeur 20D,20G, et sachant qu'une roue 24D,24G comprend un corps cylindrique 26, chaque élément 22 d'une roue 24D,24G est monté au bout d'un bras 28 s'étendant depuis ce corps cylindrique 26 dans au moins une direction axiale DA parallèle à l'axe central AD,AG de cette roue 24D,24G.

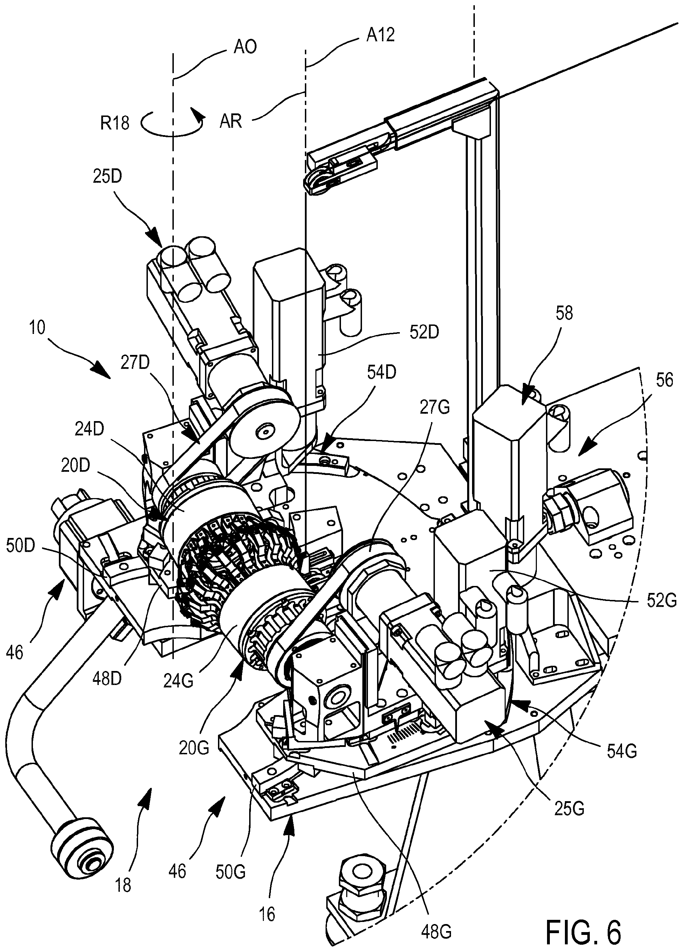

Dans une variante plus perfectionnée d'un convoyeur 20D,20G illustrée par les figures 5 et 6, chaque bras 28 s'étend aussi depuis le corps cylindrique 26 dans une direction radiale DR perpendiculaire à l'axe central AD,AG de la roue 24D,24G. Ainsi, chaque élément 22 étant déporté radialement par rapport au corps cylindrique 26 de sa roue 24D,24G, il est possible de déposer le fil 12 ondulé sur une surface de réception 14, telle une ébauche de pneumatique, présentant des parties en surépaisseur ou en saillie à proximité de la zone où est déposée le fil 12.

Toujours dans cette variante plus perfectionnée d'un convoyeur 20D,20G illustrée par les figures 5 et 6, un bras 28 est un élément indépendant et assemblé de manière démontable au corps cylindrique 26 d'une roue 24D,24G. Ainsi, il est possible de modifier le déport axial et/ou radial des éléments 22 simplement en changeant les bras 28, ce qui permet d'éviter de démonter les roues 24D,24G entièrement, et surtout d'éviter de les démonter du support 16 et de les déconnecter de leurs moyens d'entrainement en rotation.

Dans un premier mode de réalisation de l'invention, la synchronisation des roues 24D,24G est mécanique et par exemple réalisée à l'aide d'une liaison 47 de type joint de cardan ou joint homocinétique, cette liaison 47 étant visible en figure 4.

Toutefois, une telle liaison mécanique étant susceptible de s'user et de prendre de plus en plus de jeu, dans un second mode de réalisation illustré en figure 6, la synchronisation est fiabilisée en étant automatisée. A cet effet, chaque roue 24D,24G est entrainée en rotation autour de son axe central AD,AG par son propre moteur 25D,25G, des moyens électroniques permettant de synchroniser les vitesses de rotation de ces deux moteurs et un ensemble poulies/courroie 27D,27G reliant chaque moteur 25D,25G à sa roue.

De préférence, chaque élément 22 est un pion 23 qui s'étend le long d'un axe longitudinal A23 perpendiculaire à l'axe central AD,AG de sa roue 24D,24G.

Aussi, et afin de permettre la mise en forme et la dépose d'un fil 12 présentant un certain collant, chaque pion 23 est mobile en rotation autour de son axe longitudinal A23 ou, alternativement, chaque pion 23 est équipé d'un galet de guidage 30, représenté sur les figures 1 à 4, monté mobile en rotation autour de cet axe longitudinal A23.

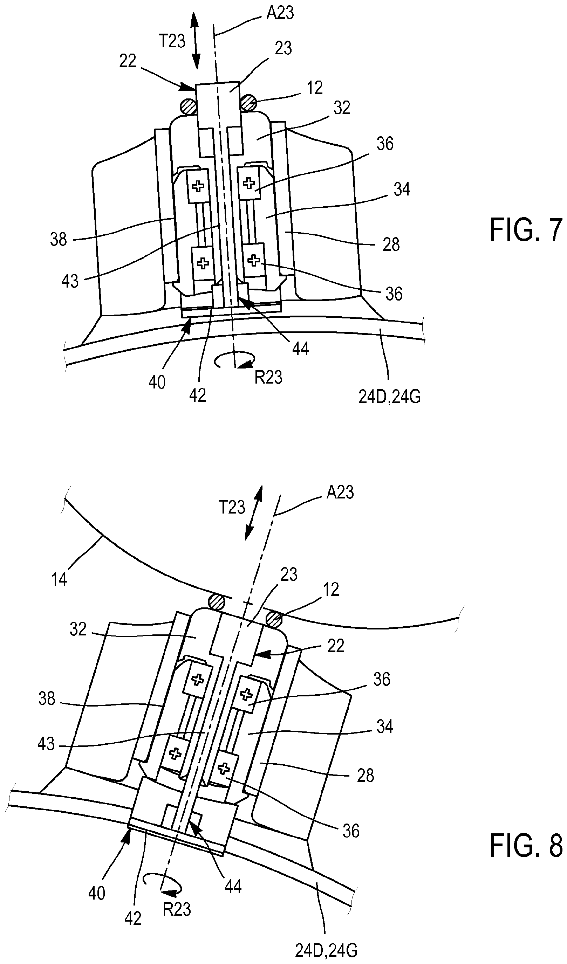

En vue d'améliorer la qualité de dépose du fil 12 ondulé sur la surface de réception 14 et d'éviter de marquer cette surface de réception 14 avec les pions 23, chaque pion 23 est monté mobile en translation T23 le long de son axe longitudinal A23 entre une première position déployée, illustrée en figure 7, dans laquelle il permet de saisir le fil 12 pour le mettre en forme ondulée et une seconde position rétractée, illustrée en figure 8, dans laquelle il permet de libérer le fil 12 pour le déposer sur la surface de réception 14, et inversement.

En vue de ce montage en translation T23, chaque pion 23 est monté coulissant dans un fourreau 32 porté par le bras 28 de ce pion 23.

Dans la variante, nullement limitative, de montage d'un pion 23 sur un bras 28 illustrée par les figures 7 et 8, la rotation R23 d'un pion 23 autour de son axe longitudinal A23 est obtenue en montant son fourreau 32 sur une bague 34 via des paliers de roulement 36, la bague 34 étant par exemple montée en force ou collée dans un alésage 38 prévu dans le bras 28 de ce pion 23.

Lors de l'utilisation du dispositif de dépose 10, et plus précisément lorsqu'un pion 23 entre en contact avec la surface de réception 14, ce pion 23 est poussé vers sa position rétractée et il libère le fil 12 afin que ce dernier adhère à la surface de réception 14, cette surface de réception 14 ou le fil 12 offrant un certain collant nécessaire à la mise en oeuvre de la dépose. Avantageusement, lors de la rétraction du pion 23, le fourreau 32 permet de plaquer le fil 12 contre la surface de réception 14.

Aussi, il est prévu des moyens de rappel 40 qui ramènent chaque pion 23 de sa position rétractée vers sa position déployée. Ainsi, chaque pion 23 peut de nouveau être utilisé pour saisir le fil 12 et le mettre en forme ondulée lors d'un nouveau tour de circuit fermé CFD,CFG.

Dans la variante, nullement limitative, de montage d'un pion 23 sur un bras 28 illustrée par les figures 7 et 8, et sachant qu'un pion 23 prend la forme d'un corps longitudinal 43 avec une extrémité inférieure 44, ces moyens de rappel 40 prennent la forme d'une lame ressort 42 fixée au bras 28 et en appui sur l'extrémité inférieure 44 du pion 23.

Comme indiqué précédemment, l'angle d'intersection AI des axes centraux AD,AG des deux roues 24D,24G dans le plan de référence PR permet de définir l'amplitude des ondulations O du fil 12 et donc de maîtriser la surlongueur de fil 12 déposée grâce à ces ondulations O.

Aussi, dans un premier mode de réalisation de l'invention illustré par les figures 1 à 4, chaque roue 24D,24G étant montée respectivement sur un demi-support 16D,16G, le réglage de l'angle d'intersection AI s'effectue simplement en positionnant les demi-supports 16D,16G l'un par rapport à l'autre et en les maintenant en position à l'aide de tout moyen adapté pendant un cycle de dépose du fil 12 ondulé sur une surface de réception 14.

Toutefois, il peut être intéressant de faire varier l'amplitude des ondulations O du fil 12 pendant la dépose, par exemple pour adapter en temps réel la surlongueur de fil 12 déposé aux variations de diamètre d'une ébauche de pneumatique cylindrique.

Aussi, dans un second mode réalisation de l'invention illustré en figure 6, le dispositif de dépose 10 comprend des moyens automatisés de réglage 46 de l'angle d'intersection AI.

Plus en détail, chaque roue 24D,24G étant montée sur une platine 48D,48G, chaque platine est guidée en rotation sur un rail courbe 50D,50G et chaque platine 48D,48G est mise en rotation sur son rail courbe 50D,50G par son propre moteur 52D,52G via un ensemble pignon/crémaillère 54D,54G.

De préférence, les deux platines 48D,48G, et donc les deux roues 24D,24G, sont entrainées en rotation autour d'un même axe de réglage AR perpendiculaire au plan de référence PR.

Plus particulièrement, et afin de se situer dans un axe d'arrivée A12 idéal du fil 12, l'axe de réglage AR est sensiblement tangentiel aux circuits fermés circulaires CFD,CFG des deux roues 24D,24G dans la zone d'arrivée Z1 de la première portion P1 de ces deux circuits CFD,CFG, c'est-à-dire à l'arrière de la tête de dépose 18.

Enfin, dans ce second mode réalisation de l'invention, le dispositif de dépose 10 comprend aussi des moyens d'orientation 56 de la tête de dépose 18 autour d'un axe d'orientation AO perpendiculaire au plan de référence PR, mais distinct de l'axe de réglage AR. De préférence, cet axe d'orientation AO se situe à l'avant de la tête de dépose 18 et il est tangent à la seconde portion P2 des circuits fermés CFD,CFG qui suit un profil en arc-de-cercle dans la zone de dépose Z2 du fil 12 ondulé. Ainsi, lorsque la surface de réception 14 est cylindrique, l'axe d'orientation AO est aussi tangent à cette surface de réception 14. De préférence, la rotation R18 de la tête de dépose 18 autour de son axe d'orientation AO est motorisée à l'aide d'un moteur 58 et cette rotation R18 permet de déposer un fil 12 ondulé sur des surfaces de réception 14 bombées ou avec des formes en saillie.

D'une manière plus générale, et toujours en vue de faire varier l'amplitude des ondulations O du fil 12 pendant la dépose, l'invention prévoit qu'au moins un convoyeur 20D,20G est monté mobile par rapport à l'autre convoyeur de façon que le déplacement de ce convoyeur par rapport à l'autre permette de modifier l'amplitude des ondulations O du fil 12 déposé.

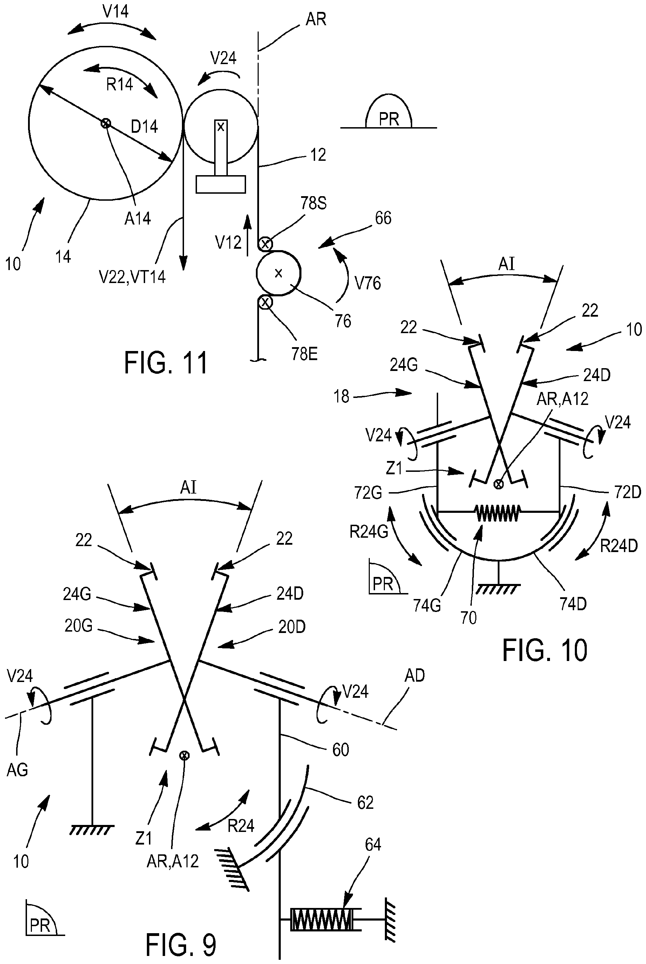

Par exemple, dans un troisième mode de réalisation de l'invention illustré en figure 9, une seule roue 24D est mise en rotation R24 autour de l'axe de réglage AR correspondant de préférence à l'axe d'arrivée A12 idéal du fil 12. A cet effet, cette roue 24D est montée sur un support 60 guidé en rotation autour de l'axe de régale AR sur un rail courbe 62.

Toujours dans ce troisième mode de réalisation, le dispositif de dépose 10 comprend des moyens de rappel 64 tendant à déplacer la roue 24D par rapport à l'autre roue 24G de façon que l'amplitude des ondulations O du fil 12 déposé augmente, ces moyens de rappel 64 étant associés à un dispositif de délivrance 66 illustré en figure 11 et qui permet de contrôler la vitesse linéaire V12 à laquelle le fil 12 est délivré aux pions 23 des roues 24D,24G, soit plus généralement, aux éléments 22 des convoyeurs 20D,20G de la tête de dépose 18.

Plus précisément, dans ce troisième mode de réalisation, les moyens de rappel 64 agissent sur le support 60 de la roue 24D et ils travaillent en compression lorsqu'ils tendent à augmenter l'amplitude des ondulations O du fil 12.

Dans un quatrième mode de réalisation illustré en figure 10, le dispositif de dépose 10 comprend deux roues 24D,24G montées mobiles en rotation R24D,R24G autour de l'axe de réglage AR correspondant de préférence à l'axe d'arrivée A12 idéal du fil 12, et des moyens de rappel 70 interposés entre les deux roues 24D,24G tendent à déplacer une roue par rapport à l'autre roue de façon que l'amplitude des ondulations O du fil 12 déposé augmente.

Comme précédemment, ces moyens de rappel 70 sont associés à un dispositif de délivrance 66 illustré en figure 11 et permettant de contrôler la vitesse linéaire V12 à laquelle le fil 12 est délivré aux pions 23 des roues 24D,24G, soit plus généralement, aux éléments 22 des convoyeurs 20D,20G de la tête de dépose 18.

Plus précisément, dans ce quatrième mode de réalisation, chaque roue 24D,24G est montée sur un support 72D,72G guidé en rotation autour de l'axe de réglage AR sur un rail courbe 74D,74G. De plus, les moyens de rappel 70 sont interposés entre ces deux supports 72D,72G, et ils travaillent en traction lorsqu'ils tendent à augmenter l'amplitude des ondulations O du fil 12.

Dans le troisième ou le quatrième mode de réalisation du dispositif de dépose 10, le dispositif de délivrance 66 prend la forme d'un cabestan comprenant une poulie centrale 76 et deux galets de renvoi 78E,78S prévus en entrée et en sortie de la poulie centrale 76.

Les deux galets de renvoi 78E,78S sont positionnés de part et d'autre de la poulie centrale 76 de manière à plaquer le fil 12 sur la poulie centrale 76. Aussi, la vitesse de rotation V76 de la poulie centrale 76 permet de contrôler directement la vitesse linéaire de délivrance V12 du fil 12 à la tête de dépose 18. En complément, il peut aussi être prévu une courroie (non représentée) plaquant le fil 12 sur la poulie centrale 76 et évitant les glissements du fil 12 sur la poulie centrale 76.

L'association des moyens de rappel 64,70 et du dispositif de délivrance 66 permet de s'assurer que la surlongueur de fil 12 désirée est déposée à chaque tour du fil 12 ondulé autour d'une surface de réception 14 cylindrique telle qu'une ébauche de pneumatique, et cela quel que soit le diamètre D14 de cette surface de réception 14 autour de son axe central A14.

En effet, en interagissant avec le dispositif de délivrance 66 via la tension du fil 12, les moyens de rappel 64,70 permettent d'augmenter instantanément l'amplitude des ondulations O du fil 12 déposé lorsque le fil 12 se détend entre le dispositif de délivrance 66 et la tête de dépose 18, la tension du fil 12 diminuant lorsque la tête de dépose 18 reçoit le fil 12 plus vite qu'elle ne le dépose sur la surface de réception 14 et par exemple parce que le diamètre D14 de la surface de réception 14 a diminué par rapport au tour précédent du fil 12 autour de la surface de réception 14.

Toujours en interagissant avec le dispositif de délivrance 66 via la tension du fil 12, les moyens de rappel 64,70 permettent aussi de réduire instantanément l'amplitude des ondulations O du fil 12 déposé lorsque le fil 12 se tend entre le dispositif de délivrance 66 et la tête de dépose 18, la tension du fil 12 augmentant lorsque la tête dépose 18 dépose le fil 12 ondulé plus vite qu'elle ne le reçoit et par exemple parce que le diamètre D14 de la surface de réception 14 a augmenté par rapport au tour précédent du fil 12 autour de la surface de réception 14.

Plus en détail, lorsque le fil 12 se tend entre le dispositif de délivrance 66 et la tête de dépose 18, sa tension s'oppose à l'effort déployé par les moyens de rappel 64,70, et donc l'angle d'intersection AI entre les axes centraux AD,AG des deux roues 24D,24G réduit, ce qui entraine une réduction de l'amplitude des ondulations O du fil 12.

Et, lorsque le fil 12 se détend entre le dispositif de délivrance 66 et la tête de dépose 18, sa tension ne s'oppose plus à l'effort déployé par les moyens de rappel 64,70, et donc l'angle d'intersection AI entre les axes centraux AD,AG des deux roues 24D,24G augmente, ce qui entraine une augmentation de l'amplitude des ondulations O du fil 12.

La présente invention concerne aussi un procédé de dépose d'un fil 12 ondulé sur une surface de réception 14 cylindrique et entrainée en rotation R14 autour de son axe central A14. Selon l'invention, ce procédé de dépose consiste à utiliser le dispositif de dépose 10 dans son troisième ou son quatrième mode de réalisation pour déposer un fil 12 ondulé sur la surface de réception 14 pendant que cette surface de réception 14 est entraînée en rotation R14 autour de son axe central A14.

Au cours de ce procédé de dépose, il est prévu de synchroniser la rotation R14 de la surface de réception 14 et le déplacement des éléments 22 de façon que la vitesse linéaire V22 des éléments 22 lorsqu'ils touchent la surface de réception 14 soit égale à la vitesse tangentielle VT14 de la surface de réception 14 autour de son axe central A14. Ainsi, on évite que les éléments 22 endommagent la surface de réception 14 en glissant par rapport à cette surface 14 lors de la dépose du fil 12 ondulé.

De préférence, et indépendamment des phases de freinage et d'accélération, la vitesse linéaire V22 des éléments 22 et la vitesse tangentielle VT14 de la surface de réception 14 sont maintenues constantes au cours de la dépose du fil 12 ondulé.

Ainsi, et connaissant par ailleurs le temps T mis par la surface de réception 14 pour effectuer un tour complet autour de son axe central A14 ainsi que la surlongueur S de fil 12 à déposer lors de chaque tour du fil 12 pris dans la largeur W14 de la surface de réception 14, le procédé de dépose selon l'invention prévoit, pour chaque tour du fil 12 pris dans la largeur W14 de la surface de réception 14, de délivrer le fil 12 à la tête de dépose 18 à une vitesse linéaire de délivrance V12 constante et égale au rapport de la surlongueur S de fil 12 à déposer lors de ce tour par le temps T mis par la surface de réception 14 pour effectuer ce tour, soit V12 = S/T avec V12 en mètres par seconde, S en mètres, et T en secondes.

En procédant ainsi, on s'assure, pour chaque tour du fil 12 pris dans la largeur W14 de la surface de réception 14, que la surlongueur S de fil désirée est déposée autour de la surface de réception 14, les moyens de rappel 64,70 ajustant automatiquement l'amplitude des ondulations O au rapport entre la vitesse linéaire de délivrance V12 du fil 12 et la vitesse tangentielle VT14 de la surface de réception 14.

De plus, en permettant d'ajuster automatiquement l'amplitude des ondulations O au rapport entre la vitesse de délivrance V12 du fil 12 et la vitesse tangentielle VT14 de la surface de réception 14, les moyens de rappel 64,70 permettent aussi de compenser automatiquement, en diminuant ou en réduisant instantanément l'amplitude des ondulations O, les variations positives ou négatives de la vitesse tangentielle VT14 de la surface de réception 14 dues à des irrégularités de forme de la surface de réception 14 ou à des variations de diamètre D14 de la surface de réception 14.

Avantageusement, on constate que, utilisé avec le procédé de dépose qui vient d'être décrit, le dispositif de dépose 10 équipé de ses moyens de rappel 64,70 et du dispositif de délivrance 66 permet de déposer la surlongueur S de fil 12 désirée sans nécessiter de connaître le diamètre de l'ébauche, ce qui est particulièrement intéressant dans le cadre de la fabrication de pneumatiques.

En effet, dans une application visée par la présente invention, le procédé de dépose et le dispositif de dépose 10 sont utilisés pour déposer un fil 12 ondulé sur une ébauche de pneumatique.

Avantageusement, les ondulations O du fil 12 déposé permettent une augmentation ultérieure du diamètre de l'ébauche de pneumatique.

Ainsi, le fil 12 ondulé servant par exemple à la réalisation d'une nappe de renfort dite à zéro degré peut être déposé « à plat » sur une ébauche de pneumatique, c'est-à-dire avant que cette ébauche de pneumatique ne subisse l'étape de conformation l'emmenant d'une forme cylindrique à une forme torique.

Bien entendu, le fil 12 ondulé peut aussi être utilisé pour la réalisation d'autres renforts ou d'autres nappes de l'ébauche de pneumatique, et les ondulations O du fil 12 peuvent aussi être calculées et utilisées pour autoriser d'autres augmentations de diamètre de l'ébauche de pneumatique comme le supplément de conformation subi par cette ébauche dans son moule de vulcanisation.

Dans le cadre de la réalisation d'une nappe de renfort dite à zéro degré, le fil 12 ondulé est déposé sur plusieurs tours autour de l'ébauche de pneumatique.

Bien entendu, le fil 12 ondulé peut aussi être déposé sur plusieurs tours autour de l'ébauche de pneumatique pour la réalisation d'autres types de nappes du pneumatique ou d'autres types de renfort.

Comme la forme finale d'une ébauche de pneumatique est torique et non cylindrique, il est nécessaire de réduire l'amplitude des ondulations O du fil 12 déposé aux abords des épaules du futur pneumatique et d'augmenter l'amplitude des ondulations O du fil 12 dans la partie centrale du sommet du futur pneumatique.

Aussi, le procédé de dépose prévoit de faire varier l'amplitude des ondulations O du fil 12 déposé d'un tour de fil à l'autre pris dans la largeur de W14 de l'ébauche de pneumatique. A cet effet, il suffit de faire varier l'angle d'intersection AI entre les axes centraux AD,AG des deux roues 24D,24G lors de chaque nouveau tour de l'ébauche autour de son axe central A14.

## Revendications

1. Dispositif de dépose (10) d'un fil (12) ondulé sur une surface de réception (14), le dispositif de dépose (10) comprenant un support (16) et une tête de dépose (18) du fil (12) ondulé sur la surface de réception (14), le dispositif étant **caractérisé en ce que** cette tête de dépose (18) comprend deux convoyeurs droit (20D) et gauche (20G), chaque convoyeur (20D,20G) transportant une pluralité d'éléments (22) permettant de saisir le fil (12), de mettre le fil (12) en forme ondulée et d'emmener le fil (12) ondulé jusqu'à la surface de réception (14), les éléments (22) de chaque convoyeur (20D,20G) étant alignés le long d'un circuit fermé (CFD,CFG) propre à chaque convoyeur, les éléments (22) de chaque convoyeur (20D,20G) s'étendant vers l'extérieur (E) de leur circuit fermé (CFD,CFG), les éléments (22) de chaque convoyeur (20D,20G) étant mis en mouvement le long de leur circuit fermé (CFD,CFG), les deux convoyeurs droit (20D) et gauche (20G) étant montés en vis-à-vis sur le support (16) de façon que chaque élément (22) d'un convoyeur (20D,20G) croise à deux endroits (E1,E2) le circuit fermé (CFD,CFG) suivi par les éléments (22) de l'autre convoyeur (20D,20G) lorsque cet élément (22) effectue un tour complet du circuit fermé (CFD,CFG) de son convoyeur, et la mise en mouvement des éléments (22) d'un convoyeur (20D,20G) étant synchronisée avec la mise en mouvement des éléments (22) de l'autre convoyeur (20D,20G).

2. Dispositif de dépose (10) d'un fil ondulé selon la revendication 1, dans lequel chaque élément (22) d'un convoyeur (20D,20G) est espacé de l'élément (22) qui le précède et de l'élément (22) qui le suit au sein du circuit fermé (CFD,CFG) de son convoyeur (20D,20G), et dans lequel les deux convoyeurs droit (20D) et gauche (20G) sont montés sur le support (16) de façon que les éléments (22) d'un convoyeur (20D,20G) engrènent avec les éléments (22) de l'autre convoyeur (20D,20G) quand ces éléments (22) se croisent.

3. Dispositif de dépose (10) d'un fil ondulé selon l'une des revendications précédentes, dans lequel au moins une portion (P1,P2) de chaque circuit fermé (CFD,CFG) suit un profil en arc de cercle.

4. Dispositif de dépose (10) d'un fil ondulé selon la revendication 3, dans lequel chaque convoyeur (20D,20G) prend la forme d'une roue (24D,24G) montée sur le support (16) et entraînée en rotation (RD,RG) autour de son axe central (AD,AG).

5. Dispositif de dépose (10) d'un fil ondulé selon la revendication 4, dans lequel, une roue (24D,24G) comprenant un corps cylindrique (26), chaque élément (22) d'une roue (24D,24G) est monté au bout d'un bras (28) s'étendant depuis ce corps cylindrique (26) dans au moins une direction axiale (DA) parallèle à l'axe central (AD,AG) de cette roue (24D,24G).

6. Dispositif de dépose (10) d'un fil ondulé selon la revendication 5, dans lequel chaque bras (28) s'étend aussi depuis le corps cylindrique (26) dans une direction radiale (DR) perpendiculaire à l'axe central (AD,AG) de la roue (24D,24G).

7. Dispositif de dépose (10) d'un fil ondulé selon l'une des revendications 3 à 6, dans lequel chaque élément (22) est un pion (23) qui s'étend autour d'un axe longitudinal (A23) perpendiculaire à l'axe central (AD,AG) de sa roue (24D,24G).

8. Dispositif de dépose (10) d'un fil ondulé selon la revendication 7, dans lequel chaque pion (23) est mobile en rotation autour de son axe longitudinal (A23) ou dans lequel chaque pion (23) est équipé d'un galet de guidage (30) monté mobile en rotation autour de cet axe longitudinal (A23).

9. Dispositif de dépose (10) d'un fil ondulé selon la revendication 7 ou 8, dans lequel chaque pion (23) est monté mobile en translation (T22) le long de son axe longitudinal (A23) entre une première position déployée dans laquelle il permet de saisir le fil (12) pour le mettre en forme ondulée et une seconde position rétractée dans laquelle il permet de libérer le fil (12) pour le déposer sur la surface de réception (14), et inversement.

10. Dispositif de dépose (10) d'un fil ondulé selon la revendication 9, dans lequel des moyens de rappel (40) ramènent chaque pion (23) de sa position rétractée vers sa position déployée.

## Patentansprüche

1. Vorrichtung zur Ablage (10) eines gewellten Drahtes (12) auf eine Aufnahmefläche (14), wobei die Vorrichtung zur Ablage (10) eine Halterung (16) und einen Kopf zur Ablage (18) des gewellten Drahtes (12) auf die Aufnahmefläche (14) umfasst, wobei die Vorrichtung **dadurch gekennzeichnet ist, dass** dieser Kopf zur Ablage (18) einen rechten (20D) und einen linken Förderer (20G) umfasst, wobei jeder Förderer (20D, 20G) mehrere Elemente (22) transportiert, die es ermöglichen, den Draht (12) zu greifen, den Draht (12) in eine gewellte Form zu bringen und den gewellten Draht (12) bis zu der Aufnahmefläche (14) mitzunehmen, wobei die Elemente (22) jedes Förderers (20D, 20G) entlang eines zu dem jeweiligen Förderer gehörenden geschlossenen Kreises (CFD, CFG) aufgereiht sind, wobei sich die Elemente (22) jedes Förderers (20D, 20G) zur Außenseite (E) ihres geschlossenen Kreises (CFD, CFG) hin erstrecken, wobei die Elemente (22) jedes Förderers (20D, 20G) in eine Bewegung entlang ihres geschlossenen Kreises (CFD, CFG) versetzt werden, wobei der rechte (20D) und der linke Förderer (20G) gegenüber der Halterung (16) derart angebracht sind, dass jedes Element (22) eines Förderers (20D, 20G) an zwei Stellen (E1, E2) den geschlossenen Kreis (CFD, CFG) kreuzt, gefolgt von den Elementen (22) des anderen Förderers (20D, 20G), wenn dieses Element (22) den geschlossenen Kreis (CFD, CFG) seines Förderers einmal vollständig durchläuft, und das Inbewegungsetzen der Elemente (22) eines Förderers (20D, 20G) mit dem Inbewegungsetzen der Elemente (22) des anderen Förderers (20D, 20G) synchronisiert ist.

2. Vorrichtung zur Ablage (10) eines gewellten Drahtes nach Anspruch 1, wobei jedes Element (22) eines Förderers (20D, 20G) von dem Element (22), das ihm vorangeht, und dem Element (22), das ihm nachfolgt, innerhalb des geschlossenen Kreises (CFD, CFG) seines Förderers (20D, 20G) beabstandet ist, und wobei der rechte (20D) und der linke Förderer (20G) auf der Halterung (16) derart angebracht sind, dass die Elemente (22) eines Förderers (20D, 20G) mit den Elementen (22) des anderen Förderers (20D, 20G) kämmen, wenn diese Elemente (22) sich kreuzen.

3. Vorrichtung zur Ablage (10) eines gewellten Drahtes nach einem der vorhergehenden Ansprüche, wobei wenigstens ein Abschnitt (P1, P2) jedes geschlossenen Kreises (CFD, CFG) einem kreisbogenförmigen Profil folgt.

4. Vorrichtung zur Ablage (10) eines gewellten Drahtes nach Anspruch 3, wobei jeder Förderer (20D, 20G) die Form eines Rades (24D, 24G) annimmt, das auf der Halterung (16) angebracht ist und um seine Mittelachse (AD, AG) drehend angetrieben (RD, RG) wird.

5. Vorrichtung zur Ablage (10) eines gewellten Drahtes nach Anspruch 4, wobei ein Rad (24D, 24G) einen zylindrischen Körper (26) umfasst, wobei jedes Element (22) eines Rades (24D, 24G) am Ende eines Armes (28) angebracht ist, der sich von diesem zylindrischen Körper (26) aus in wenigstens einer axialen Richtung (DA) erstreckt, die zur Mittelachse (AD, AG) dieses Rades (24D, 24G) parallel ist.

6. Vorrichtung zur Ablage (10) eines gewellten Drahtes nach Anspruch 5, wobei sich jeder Arm (28) auch von dem zylindrischen Körper (26) aus in einer radialen Richtung (DR) erstreckt, die zur Mittelachse (AD, AG) des Rades (24D, 24G) senkrecht ist.

7. Vorrichtung zur Ablage (10) eines gewellten Drahtes nach einem der Ansprüche 3 bis 6, wobei jedes Element (22) ein Stift (23) ist, welcher sich um eine Längsachse (A23) erstreckt, die zur Mittelachse (AD, AG) seines Rades (24D, 24G) senkrecht ist.

8. Vorrichtung zur Ablage (10) eines gewellten Drahtes nach Anspruch 7, wobei jeder Stift (23) drehbeweglich um seine Längsachse (A23) ist oder wobei jeder Stift (23) mit einer Führungsrolle (30) ausgestattet ist, die drehbeweglich um diese Längsachse (A23) gelagert ist.

9. Vorrichtung zur Ablage (10) eines gewellten Drahtes nach Anspruch 7 oder 8, wobei jeder Stift (23) (T22) entlang seiner Längsachse (A23) translatorisch zwischen einer ersten, ausgefahrenen Position, in welcher er ermöglicht, den Draht (12) zu greifen, um ihn in eine gewellte Form zu bringen, und einer zurückgezogenen Position, in welcher er ermöglicht, den Draht (12) freizugeben, um ihn auf die Aufnahmefläche (14) abzulegen, beweglich ist.

10. Vorrichtung zur Ablage (10) eines gewellten Drahtes nach Anspruch 9, wobei Rückholmittel (40) jeden Stift (23) aus seiner zurückgezogenen Position in seine ausgefahrene Position zurückholen.

## Claims

1. Device (10) for depositing a wavy thread (12) on a receiving surface (14), the deposition device (10) comprising a support (16) and a deposition head (18) for depositing the wavy thread (12) on the receiving surface (14), the device being **characterized in that** this deposition head (18) comprises a right-hand conveyor (20D) and a left-hand conveyor (20G), each conveyor (20D, 20G) transporting a plurality of elements (22) for grasping the thread (12), putting the thread (12) into a wavy shape and feeding the wavy thread (12) to the receiving surface (14), the elements (22) of each conveyor (20D, 20G) being aligned along a closed circuit (CFD, CFG) belonging to each conveyor, the elements (22) of each conveyor (20D, 20G) extending towards the exterior (E) of their closed circuits (CFD, CFG), the elements (22) of each conveyor (20D, 20G) being set in motion along their closed circuits (CFD, CFG), the right-hand conveyor (20D) and left-hand conveyor (20G) being mounted facing one another on the support (16) such that each element (22) of a conveyor (20D, 20G) crosses, at two locations (E1, E2), the closed circuit (CFD, CFG) followed by the elements (22) of the other conveyor (20D, 20G) when this element (22) carries out a complete loop of the closed circuit (CFD, CFG) of its conveyor, and the setting of the elements (22) of a conveyor (20D, 20G) into motion being synchronized with the setting of the elements (22) of the other conveyor (20D, 20G) into motion.

2. Device (10) for depositing a wavy thread according to Claim 1, wherein each element (22) of a conveyor (20D, 20G) is spaced apart from the element (22) that precedes it and the element (22) that follows it within the closed circuit (CFD, CFG) of its conveyor (20D, 20G), and wherein the right-hand conveyor (20D) and left-hand conveyor (20G) are mounted on the support (16) such that the elements (22) of one conveyor (20D, 20G) mesh with the elements (22) of the other conveyor (20D, 20G) when these elements (22) cross.

3. Device (10) for depositing a wavy thread according to either of the preceding claims, wherein at least one portion (P1, P2) of each closed circuit (CFD, CFG) follows a profile in the form of a circular arc.

4. Device (10) for depositing a wavy thread according to Claim 3, wherein each conveyor (20D, 20G) is in the form of a wheel (24D, 24G) that is mounted on the support (16) and driven in rotation (RD, RG) about its central axis (AD, AG).

5. Device (10) for depositing a wavy thread according to Claim 4, wherein, with a wheel (24D, 24G) comprising a cylindrical body (26), each element (22) of a wheel (24D, 24G) is mounted at the end of an arm (28) that extends from this cylindrical body (26) in at least one axial direction (DA) parallel to the central axis (AD, AG) of this wheel (24D, 24G).

6. Device (10) for depositing a wavy thread according to Claim 5, wherein each arm (28) also extends from the cylindrical body (26) in a radial direction (DR) perpendicular to the central axis (AD, AG) of the wheel (24D, 24G).

7. Device (10) for depositing a wavy thread according to one of Claims 3 to 6, wherein each element (22) is a pin (23) which extends about a longitudinal axis (A23) perpendicular to the central axis (AD, AG) of its wheel (24D, 24G).

8. Device (10) for depositing a wavy thread according to Claim 7, wherein each pin (23) is able to rotate about its longitudinal axis (A23) or wherein each pin (23) is equipped with a guiding roller (30) that is mounted so as to be able to rotate about this longitudinal axis (A23).

9. Device (10) for depositing a wavy thread according to Claim 7 or 8, wherein each pin (23) is mounted so as to be able to move in translation (T22) along its longitudinal axis (A23) between a first, deployed position in which it grasps the thread (12) in order to put it into a wavy shape, and a second, retracted position in which it releases the thread (12) in order to deposit it on the receiving surface (14), and vice versa.

10. Device (10) for depositing a wavy thread according to Claim 9, wherein return means (40) return each pin (23) from its retracted position to its deployed position.
